# EUROPÄISCHE PATENTSCHRIFT

(11) **EP 2 356 528 B1**
(45) Veröffentlichungstag und Bekanntmachung des Hinweises auf die Patenterteilung: **24.04.2013**
(21) Anmeldenummer: 09756265.6
(22) Anmeldetag: 20.11.2009
(51) Int. Cl.: G05B 19/418, H04L 12/417, H04L 12/423

(54) **VERFAHREN ZUM ÜBERTRAGEN VON DATEN IN EINEM AUTOMATISIERTEN STEUERUNGSSYSTEM**
METHOD FOR TRANSFERRING DATA IN AN AUTOMATED CONTROL SYSTEM
PROCÉDÉ POUR TRANSFÉRER DES DONNÉES DANS UN SYSTÈME DE COMMANDE AUTOMATISÉ

(30) Priorität: 25.11.2008 DE 102008060007
(43) Veröffentlichungstag der Anmeldung: 17.08.2011
(73) Patentinhaber: Pilz GmbH & Co. KG, 73760 Ostfildern (DE)
(72) Erfinder: SCHWENKEL, Hans, 70192 Stuttgart (DE)
(74) Vertreter: Witte, Weller & Partner
(86) Internationale Anmeldenummer: PCT/EP2009/008261
(87) Internationale Veröffentlichungsnummer: WO 2010/060571

(56) Entgegenhaltungen:
- EP-A2- 0 972 388
- DE-A1- 19 545 566
- DE-A1- 19 928 517
- DE-A1-102007 028 387
- US-A- 4 570 215

## Beschreibung

Die vorliegende Erfindung betrifft ein zum Übertragen von Daten in einem automatisierten Steuerungssystem mit einer Vielzahl von räumlich verteilten Stationen, die über ein Kommunikationsmedium miteinander verbunden sind, sowie ein entsprechendes Steuerungssystem. Etwas genauer betrifft die Erfindung ein Verfahren, mit dessen Hilfe eine Steuereinheit mit abgesetzten Sensoren und/oder Aktoren eines automatisierten Steuerungssystems kommunizieren kann.

In der Steuer- und Automatisierungstechnik ist die Verwendung von so genannten Feldbussen zur Datenkommunikation zwischen mehreren voneinander entfernten Einheiten eines Steuerungssystems hinreichend bekannt. Ein Beispiel für ein Steuerungssystem mit einem Feldbus ist in DE 199 28 517 A1 beschrieben. Dort arbeitet der Feldbus nach dem Interbus-Protokoll. Ein so genannter Busmaster, der in der Regel in der Steuereinheit angeordnet ist, erzeugt einen Datenrahmen mit einem definierten Startwort (so genanntes Loop Back Word) und einer Anzahl von Datenfeldern, die genau der Anzahl der zusätzlich zur Steuereinheit an den Feldbus angeschlossenen Stationen entspricht. Der Busmaster und die weiteren Stationen sind in einer Ringstruktur verbunden, in der die Stationen eine Art Schieberegister bilden. Der vom Busmaster erzeugte Datenrahmen wird schrittweise durch die Stationen hindurch geschoben, bis der Busmaster das Startwort von der letzten Station der Ringstruktur zurück erhält. Über ein Steuersignal signalisiert der Busmaster dann allen Stationen, dass sie die in diesem Moment in der Station befindlichen Datenfelder lesen sollen und mit eigenen neuen Sendedaten belegen können. Anschließend beginnt der Busmaster einen neuen Datenzyklus, in dem der Datenrahmen mit dem Startwort erneut in dem ringförmigen Schieberegister umhergeschoben wird. Auf diese Weise gelangen die Sendedaten der Stationen der Reihe nach zum Busmaster. Charakteristisch am Interbus-Protokoll ist somit ein einziger zyklisch umlaufender Datenrahmen, von dem in jeder Station zu jedem Zeitpunkt jeweils ein Teil gespeichert ist, wobei die einzelnen Stationen auf ein Steuersignal des Busmasters hin Informationen aus zugewiesenen Datenfeldern lesen und anschließend eigene Informationen in dieselben Datenfelder schreiben. Man kann sich das Funktionsprinzip wie einen umlaufenden Zug vorstellen, der von einer Lokomotive (in Form des Startwortes) gezogen wird, wobei die einzelnen Stationen Informationen aus einem individuell zugewiesenen Waggon entnehmen und denselben Waggons mit Informationen "beladen". Ein Vorteil dieses Prinzips ist das determinierte Zeitverhalten. Man kann anhand der Länge des Datenrahmens bzw. der Anzahl der Stationen verlässlich vorhersagen, wie lange es dauert, bis der Busmaster sämtliche Stationen einmal abgefragt hat. Nachteilig am Interbus ist, dass jede Station eine ihr zugewiesene Stelle innerhalb des Datenrahmens auslesen und beschreiben muss, was nur mit Hilfe spezieller Protokollchips in einer akzeptablen Geschwindigkeit zu realisieren ist. Sämtliche Stationen benötigen somit die speziellen Interbus-Protokollchips. Für Anwendungen, in denen nur relativ kleine Datenmengen von und zu einer Station übertragen werden sollen, ist das Interbus-Konzept häufig zu aufwändig und zu teuer.

Ein anderes Feldbus-System, bei dem die Kommunikation zwischen verteilten Stationen über einen zyklisch umlaufenden Datenrahmen realisiert wird, ist aus DE 10 2004 063 213 B4 bekannt. Der umlaufende Datenrahmen wird in bevorzugten Ausführungsbeispielen dieser Druckschrift mit Hilfe von Ethernet-Telegrammen von einer Station zur nächsten gesendet. Auch in diesem Fall müssen die einzelnen Stationen individuell zugewiesene Datenfelder innerhalb des Datenrahmens auslesen und beschreiben, was zur Erreichung akzeptabler Geschwindigkeiten ebenfalls spezielle Protokollchips erfordert. Zudem erfordern die Ethernet-Telegramme einen relativ großen Protokoll- und Telegrammoverhead, so dass die Stärken dieses bekannten Systems eher bei Anwendungen zur Geltung kommen, die sehr leistungsfähige Kommunikationssysteme mit größere Informationseinheiten erfordern.

DE 10 2006 040 709 A1 offenbart ein weiteres Verfahren, bei dem mehrere Stationen zu einer Ringstruktur verbunden sind. Auch in diesem Fall wird ein Startwort mit nachfolgenden Nutzdaten von einer Station zur nächsten weitergereicht, wobei die einzelnen Stationen eigene Nutzdaten an das Startwort anhängen. Dieses bekannte Verfahren soll adressdatenlos arbeiten und vor allem zur Übertragung von Nutzdaten mit kurzer Länge dienen.

Es gibt darüber hinaus eine Vielzahl von Feldbussystemen, bei denen die Stationen über eigene Datentelegramme miteinander kommunizieren können. Die Stationen sind in der Regel über so genannte T-Abzweige an eine gemeinsame Leitung angeschlossen. Wenn eine Station ein Datentelegramm sendet, können alle anderen Stationen mithören. Kollisionen oder Sendekonflikte, die auftreten, wenn zwei Stationen gleichzeitig senden, müssen durch die Vergabe von Prioritäten oder andere Arbitrierungsverfahren gelöst werden. Beispiele für solche Feldbusse sind den Fachleuten bekannt als CAN-Bus, Profibus, SafetyBus p, DeviceNet oder ASI. Diese Bussysteme verwenden eine gemeinsame Busleitung mit dem Nachteil, dass ein Kurzschluss oder Leitungsbruch nur durch physikalische Messverfahren bestimmt werden kann, nicht aus der Datenkommunikation auf dem Bus. Zudem ist ein solches Bussystem auf der gesamten Leitungslänge ohne Funktion, wenn ein Kurzschluss oder Leitungsbruch an einer Stelle vorliegt. Bei langen Leitungen und hohen Datenübertragungsraten ist ein Abschlusswiderstand erforderlich, und jeder Teilnehmer muss eine individuelle Adresse erhalten, die beim Austausch jeweils neu zugewiesen werden muss. Soll das Bussystem auch sicherheitsrelevante Daten übertragen, wie etwa eine Information über die Betätigung eines Not-Aus-Tasters oder einen daraus resultieren Abschaltbefehl für einen Aktor, ist die Adresszuweisung sicherheitsrelevant und infolge dessen aufwändig.

Aus DE 103 20 522 A1 sind ein Verfahren und eine Vorrichtung zum Steuern eines sicherheitskritischen Prozesses bekannt, wobei abgesetzte E/A-Einheiten sicherheitsrelevante Prozessdaten mit Hilfe einer diversitären Mehrfachübertragung über eine einkanalige Leitung an eine Steuereinheit senden, indem die abgesetzten Einheiten die zu übertragenden Nutzdaten einmal "im Klartext" und ein zweites Mal in kodierter Form übertragen. Die kodierten Daten werden hier mit einem variablen Schlüsselwort erzeugt.

DE 195 45 566 A1 offenbart ein Verfahren und eine Anordnung zur Übertragung von Daten zwischen Teilnehmern eines Bussystems, bei dem die Teilnehmer in einer Kette hintereinander geschaltet sind und zusammen mit einer Masterstation einen Datenübertragungsring bilden. Um den Programmieraufwand hinsichtlich der Adressierung bei diesem Bussystem zu reduzieren, enthält die vom Master ausgesendete Nachricht einen Erkennungsteil, der von einem Slave-Teilnehmer zum nächsten Slave-Teilnehmer weitergegeben und verändert, insbesondere inkrementiert oder dekrementiert wird. Sobald der Erkennungsteil zu null wird, erkennt der empfangende Slave-Teilnehmer, dass die Nachricht an ihn adressiert ist. Er verarbeitet die Nachricht und erzeugt eine Statusmeldung, die über die Ringleitung zum Master weitergereicht wird. Eine fehlerhafte Datenübertragung von einem Teilnehmer zum nächsten kann erkannt werden, wenn der nächste Teilnehmer eine falsche Quittierung liefert. In diesem Fall sendet der Empfänger des fehlerhaften Quittierungssignals eine Statusbotschaft in umgekehrter Richtung zum Master.

Vor diesem Hintergrund ist es eine Aufgabe der vorliegenden Erfindung, ein Verfahren und ein Steuerungssystem der eingangs genannten Art anzugeben, das einen einfachen und kostengünstigen Anschluss von verschiedenen Sensoren und Aktoren an eine zentrale Steuerungseinheit ermöglicht. Einfach und kostengünstig bezieht sich hier sowohl auf die erforderliche Hardware als auch auf den Aufwand und die Kosten für die Implementierung und den Betrieb. Ziel ist es unter anderem, eine effiziente Busauslastung mit möglichst günstiger Hardware und geringem Konfigurationsaufwand zu erreichen. Des weiteren sollen das Verfahren und das Steuerungssystem die Übertragung von sicherheitsrelevanten Informationen ermöglichen.

Gemäß einem Aspekt der Erfindung wird diese Aufgabe durch ein Verfahren zum Übertragen von Daten in einem automatisierten Steuerungssystem mit einer Vielzahl von räumlich verteilten Stationen gelöst, wobei die Stationen von Station zu Station zu einer Reihe von Stationen verbunden sind, wobei die Reihe eine erste Station, zumindest eine zweite Station und eine letzte Station aufweist, wobei die erste Station und jede zweite Station einen Nachfolger in der Reihe besitzen, und wobei jede zweite Station und die letzte Station einen Vorgänger in der Reihe besitzen, mit den Schritten:
- die erste Station erzeugt eine Anzahl von separaten Datentelegrammen, die gleich der Anzahl der zweiten Stationen plus der letzten Station ist, wobei jedes Datentelegramm an genau eine der Stationen adressiert ist,
- die erste Station versendet die Datentelegramme in definierten Zeitintervallen einzeln an ihren Nachfolger, wobei die Datentelegramme in umgekehrter Reihenfolge der Stationen adressiert sind,
- jede zweite Station empfängt ein Datentelegramm von ihrem jeweiligen Vorgänger und sendet das empfangene Datentelegramm nach Art einer Eimerkette an ihren jeweiligen Nachfolger, bis sie ein Datentelegramm erhält, das an sie selbst adressiert ist,
- die zweiten Stationen und die letzte Station erzeugen jeweils ein individuelles Antworttelegramm, das an die erste Station adressiert ist, und senden die individuellen Antworttelegramme nach Art einer Eimerkette an ihren jeweiligen Vorgänger,
wobei die Stationen die Datentelegramme alle weitgehend zeitgleich an ihren jeweiligen Nachfolger senden.

Gemäß einem weiteren Aspekt wird diese Aufgabe durch ein Steuerungssystem mit einer Vielzahl von räumlich verteilten Stationen gelöst, von denen zumindest einige Eingangsanschlüsse zum Anschluss von Sensoren oder Ausgangsanschlüsse zum Anschluss von Aktoren aufweisen, wobei die Stationen von Station zu Station zu einer Reihe von Stationen verbunden sind, wobei die Reihe eine erste Station, zumindest eine zweite Station und eine letzte Station aufweist, wobei die erste Station und jede zweite Station einen Nachfolger in der Reihe besitzen, und wobei jede zweite Station und die letzte Station einen Vorgänger in der Reihe besitzen, und wobei
- die erste Station dazu ausgebildet ist, eine Anzahl von separaten Datentelegrammen zu erzeugen, die gleich der Anzahl der zweiten Stationen plus der letzten Station ist, wobei jedes Datentelegramm an genau eine der Stationen adressiert ist,
- die erste Station ferner dazu ausgebildet ist, die Datentelegramme in definierten Zeitintervallen einzeln an ihren Nachfolger zu versenden, wobei die Datentelegramme in umgekehrter Reihenfolge der Stationen adressiert sind,
- jede zweite Station dazu ausgebildet ist, ein Datentelegramm von ihrem jeweiligen Vorgänger zu empfangen und das empfangene Datentelegramm nach Art einer Eimerkette an ihren jeweiligen Nachfolger zu versenden, bis sie ein Datentelegramm erhält, das an sie selbst adressiert ist, und
- die zweiten Stationen und die letzte Station jeweils dazu ausgebildet sind, ein individuelles Antworttelegramm, das an die erste Station adressiert ist, zu erzeugen und die individuellen Antworttelegramme nach Art einer Eimerkette an ihren jeweiligen Vorgänger zu senden,
wobei die Stationen die Datentelegramme alle weitgehend zeitgleich an ihren jeweiligen Nachfolger senden.

Das neue Verfahren und das neue Steuerungssystem unterscheiden sich von den bislang bekannten Verfahren und Systemen in verschiedenen Aspekten, je nachdem, welches bekannte Verfahren oder System man zum Vergleich heranzieht. Einerseits sind die Stationen bei dem neuen Verfahren und dem neuen System von Station zu Station zu einer Reihe von Stationen verbunden. Das neue Verfahren und das neue System verwenden also eine Linientopologie anstelle einer Ringstruktur. Die Datentelegramme werden von der ersten Station einzeln und der Reihe nach an die benachbarte zweite Station gesendet und von dieser (und von allen weiteren Stationen gleichermaßen) jeweils an die wiederum benachbarte Station weitergeleitet. Auf jedem Teilstück des Systems befindet sich folglich nur ein einziges Datentelegramm. Aufgrund der Punkt-zu-Punkt-Verbindung zwischen den einzelnen Stationen der Reihe sind Kollisionen zwischen Datentelegrammen für verschiedene Stationen ausgeschlossen. Der Aufwand für eine Arbitrierung ist gering. Bevorzugt senden die zweiten Stationen und die letzte Station ihre individuellen Antworttelegramme jeweils nur in Antwort auf ein an sie adressiertes Datentelegramm, so dass auch eine Kollision von Datentelegrammen und Antworttelegrammen auf den Teilstücken des Systems ausgeschlossen ist. In diesem Fall kann auf eine Arbitrierung praktisch gänzlich verzichtet werden.

Andererseits verwenden das neue Verfahren und das neue System jedoch einzelne Datentelegramme, die einzeln an die Stationen adressiert sind, sowie entsprechende individuelle Antworttelegramme.Jede Station erhält und versendet ein "eigenes" Telegramm. Keine Station muss die Telegramme der anderen Stationen lesen und/oder verstehen können, und es wird auch kein einheitlicher Datenrahmen für alle Stationen benötigt. Damit kann man einerseits auf spezielle Protokollchips verzichten, wie sie beim Interbus und ähnlichen Verfahren benötigt werden, um ein schnelles Lesen und Beschreiben von individuell zugewiesenen Datenfeldern eines systemweit einheitlichen Datenrahmens zu ermöglichen. Prinzipiell ist es denkbar, dass jede Station Datentelegramme erhält und Antworttelegramme versendet, die inkompatibel zu den entsprechenden Telegrammen der anderen Stationen sind, sofern ein reines Durchreichen der Datentelegramme durch alle Stationen gewährleistet ist. Es ist beispielsweise denkbar, dass die Adressdaten für eine zweite Station an einer anderen Stelle des Datentelegramms stehen als die Adressdaten für die letzte Station. Die Art und der Aufbau der Adressdaten kann auch von Station zu Station unterschiedlich sein. Maßgeblich ist allein, dass die adressierte Station ihre Adresse innerhalb eines empfangenen Datentelegramms erkennen und lesen kann. Auch die Länge der einzelnen Daten- und Antworttelegramme und der innere Protokollaufbau können von Station zu Station variieren, sofern die physikalische Ebene gemäß dem OSI-Referenzmodell insoweit einheitlich ist, dass die Daten- und Antworttelegramme einer anderen Station weitergereicht werden können.

Dass die Stationen die Datentelegramme alle weitgehend zeitgleich an ihren jeweiligen Nachfolger senden, trägt vorteilhaft dazu bei, die Busauslastung insgesamt zu optimieren. Es ist jedoch nicht notwendig, dass die Stationen die Datentelegramme exakt zeitgleich versenden, da es sich weiterhin um separate Datentelegramme handelt.

Für den Fall, dass die Leitung zwischen zwei Stationen unterbrochen oder anderweitig gestört ist, ist eine Kommunikation zwischen denjenigen Stationen, die vor und nach der Unterbrechung liegen, prinzipiell weiterhin möglich. Ein Leitungsfehler muss folglich nicht das gesamte System lahmlegen und kann anhand des Telegrammverkehrs lokalisiert werden.

Des weiteren lässt sich mit dem neuen Verfahren eine hohe Busauslastung auf dem ersten Teilstück zwischen der ersten Station und ihrem Nachfolger erreichen. Hier kann die Busauslastung optimal an die Arbeitsgeschwindigkeit der ersten Station angepasst werden. Je weiter die anderen Stationen von der ersten Station entfernt liegen, desto mehr sinkt zwar die Busauslastung der entsprechenden Teilstücke. Dies hat jedoch auf die Leistungsfähigkeit des Steuerungssystems insgesamt keinen negativen Einfluss, solange die erste Station über das erste Teilstück mit ihrem Nachfolger in optimaler Taktrate kommunizieren kann.

Schließlich ermöglichen das neue Verfahren und das neue System aufgrund der einheitlich festgelegten Kommunikation nach dem "First in/Last Out"-Prinzip (aus Sicht der ersten Station) eine sehr effiziente automatische Adresszuweisung an die einzelnen Stationen, wie weiter unten anhand eines bevorzugten Ausführungsbeispiels beschrieben ist. Damit entfällt ein großer Teil des Konfigurationsaufwandes, der bei anderen adressbasierten Systemen erforderlich ist. Besonders vorteilhaft ist dies, wenn die Daten- und Antworttelegramme zumindest teilweise sicherheitsrelevante Daten beinhalten, weil die Adresszuweisung zu Stationen, die solche sicherheitsrelevanten Daten erzeugen oder verarbeiten, ein sicherheitsrelevanter Schritt ist. Aufgrund der eindeutig bestimmten Kommunikationsstruktur kann auch sicherheitsrelevanten Stationen eine Adresse fehlersicher im Sinne der Kategorien 3 oder 4 der europäischen Norm EN 954-1 (oder vergleichbarer Anforderungen gemäß ISO 13849 oder IEC/EN 61 508) zugewiesen werden.

Insgesamt lassen sich das neue Verfahren und das neue Steuerungssystem daher mit relativ einfachen und kostengünstigen Hardwarekomponenten, einem geringen Verwaltungs- und Konfigurationsaufwand und einer hohen Busauslastung realisieren. Die oben genannte Aufgabe ist vollständig gelöst.

In einer weiteren Ausgestaltung verarbeiten die zweiten Stationen und die letzte Station die empfangenen Datentelegramme weitgehend zeitgleich zueinander, um die individuellen Antworttelegramme weitgehend zeitgleich zu erzeugen.

Auch diese Ausgestaltung trägt vorteilhaft dazu bei, die Busauslastung zu optimieren und die Datenkommunikation zwischen den einzelnen Stationen zu beschleunigen. Darüber hinaus eignet sich diese Ausgestaltung besonders gut für ein automatisiertes Steuerungssystem, in dem häufig viele Schritte synchron oder zumindest in einer zeitlichen Abstimmung zueinander ausgeführt werden müssen.

In einer weiteren Ausgestaltung erzeugt die erste Station vor dem erstmaligen Versenden von Datentelegrammen eine Vielzahl von Adressvergabetelegrammen und versendet diese an ihren Nachfolger, wobei den zweiten Stationen und der letzten Station jeweils eine eindeutige Stationsadresse anhand der Adressvergabetelegramme zugewiesen wird.

Das Erzeugen und Versenden von Adressvergabetelegzammen erfolgt vorteilhafterweise in einem Initialisierungsmodus, der durch einen Bediener gestartet werden kann und/oder bei jeder erneuten Inbetriebnahme oder Spannungswiederkehr automatisch gestartet wird. Alternativ oder ergänzend ist es in anderen Ausgestaltungen denkbar, dass die einzelnen Stationen eine Schnittstelle und/oder einen oder mehrere Schalter besitzen, mit deren Hilfe der jeweiligen Station eine Adresse individuell zugewiesen werden kann. Die bevorzugte Ausgestaltung kommt ohne solche Schnittstellen und Schalter aus, wenngleich es denkbar ist, die bevorzugte automatische Adresszuweisung in Ergänzung zu einer manuellen Adresszuweisung zu ermöglichen. Die bevorzugte Ausgestaltung mit automatischer Adresszuweisung ermöglicht eine einfachere und schnellere Konfiguration des Systems. Außerdem werden Fehler durch manuelle Eingaben vermieden. Darüber hinaus lassen sich die einzelnen Stationen einfacher und kostengünstiger in Gehäusen der Schutzart IP 67 integrieren, was eine Verwendung in spritz- oder schwallwassergefährdeten Bereichen erleichtert. Das Verwenden von Adressvergabetelegrammen von der ersten Station aus bietet außerdem den Vorteil, dass die erste Station die Kontrolle über alle anderen Stationen erhält und Adresskollisionen einfach vermieden werden können.

In einer weiteren Ausgestaltung versenden alle zweiten Stationen, die eine eindeutige Stationsadresse erhalten haben, die Adressvergabetelegramme an ihren jeweiligen Nachfolger.

In dieser Ausgestaltung erfolgt eine automatische Adresszuweisung innerhalb der Reihe der Stationen von vorne nach hinten, d.h. von dem Nachfolger der ersten Station bis zu der letzten Station. In besonders bevorzugten Varianten dieser Ausgestaltung versendet jede Station, die eine Adresse zugewiesen bekommen hat, ein Adressbestätigungstelegramm an die erste Station. Auf diese Weise kann eine fehlersichere Adresszuweisung sehr schnell und einfach realisiert werden.

In einer weiteren Ausgestaltung besitzt jede zweite Station einen ersten und einen separaten zweiten Busanschluss, wobei jede zweite Station über den ersten Busanschluss mit ihrem Vorgänger und über den zweiten Busanschluss mit ihrem Nachfolger verbunden ist.

In dieser Ausgestaltung besitzt zumindest jede zweite Station (vorzugsweise auch die letzte Station) zwei unabhängige Schnittstellen. Bevorzugt sind die beiden Busanschlüsse galvanisch getrennt. Die zweiten Stationen können Daten- und Antworttelegramme somit zeitgleich und unabhängig voneinander empfangen und versenden. Dies ermöglicht eine sehr schnelle und flexible Datenkommunikation und ist besonders vorteilhaft, wenn die Daten- und Antworttelegramme der einzelnen Stationen verschieden lang sein können. In einer besonders bevorzugten Variante dieser Ausgestaltung beinhaltet jeder Busanschluss einen separaten Controllerbaustein, der das Sendesignal erzeugt. Damit fungiert jede Station als Repeater, so dass relativ große Leitungslängen zwischen den Stationen überbrückt werden können.

In einer weiteren Ausgestaltung sind die Busanschlüsse CAN-Bus-kompatibel.

In dieser Ausgestaltung wird eine CAN-Bus-Hardware mit einer Kommunikationsstruktur nach Art einer Eimerkette kombiniert. Diese Ausgestaltung ist von Vorteil, weil CAN-Bus-kompatible Bausteine eine große Verbreitung besitzen und dementsprechend kostengünstig zur Verfügung stehen. Des Weiteren besitzen CAN-Bus-Bausteine integrierte und bewährte Fehlerbeherrschungs- und Korrekturmechanismen auf unterer Ebene des OSI-Modells, die für die vorliegende Erfindung sehr einfach genutzt werden können. Charakteristisch an dieser Ausgestaltung ist allerdings, dass von den beim CAN-Bus vorhandenen Arbitrierungsmöglichkeiten aufgrund der neuen Komplikationsstruktur kein Gebrauch gemacht wird.

In einer weiteren Ausgestaltung versendet die erste Station die Datentelegramme in zyklisch wiederkehrenden Zeitintervallen, wobei jedes Datentelegramm ein Codewort enthält, das von Zeitintervall zu Zeitintervall variiert, und wobei die zweiten Stationen und die letzte Station die jeweiligen individuellen Antworttelegramme in Abhängigkeit von dem zeitlich variierenden Codewort erzeugen.

Diese Ausgestaltung ist sehr vorteilhaft, wenn sicherheitsrelevante Daten zwischen der ersten Station und den weiteren Stationen ausgetauscht werden. Sicherheitsrelevante Daten in diesem Sinne sind beispielsweise die Information über den Zustand eines Not-Aus-Tasters (betätigt, nicht-betätigt, undefiniert) oder ein daraus resultierender Abschaltbefehl an einen Aktor. Diese Ausgestaltung ermöglicht es, solche sicherheitsrelevanten Daten auf einer einzigen Datenleitung zu übertragen. Mit Hilfe des variierenden Codewortes ist es möglich, die übertragenen .sicherheitsrelevanten Daten auf Plausibilität zu prüfen, selbst wenn sich die Daten über viele Zeitintervalle hinweg nicht verändern, was beispielsweise bei einem Not-Aus-Taster häufig der Fall ist.

In einer weiteren Ausgestaltung erzeugt und versendet die erste Station für jede zweite Station und für die letzte Station ein individuelles Datentelegramm, wobei die individuellen Datentelegramme für zumindest zwei verschiedene Stationen strukturell unterschiedlich sind.

Strukturell unterschiedliche Datentelegramme sind insbesondere solche, deren Aufbau und Zusammensetzung unterschiedlich ist. Beispielsweise könnte es sein, dass die Adressdaten in dem einen Datentelegramm relativ weit vorne stehen, während sie in einem Datentelegramm zu einer anderen Station relativ weit hinten oder an einer beliebigen anderen Stelle stehen. Auch der Aufbau und/oder die Länge der Adressdaten, die Anzahl und Verwendung von Protokolldaten, wie etwa eine Prüfsumme (CRC), oder diversitäre Mehrfachübertragungen von Daten unter Verwendung von variierenden Codewörtern können strukturelle Unterschiede begründen. Diese Ausgestaltung macht von den vorteilhaften Möglichkeiten der neuen Kommunikationsstruktur Gebrauch, die sich daraus ergeben, dass die Stationen keinen gemeinsamen Datenrahmen teilen müssen, sondern über separate Datentelegramme kommunizieren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine vereinfachte Darstellung eines bevorzugten Ausführungsbeispiels des neuen Steuerungssystems,
- Fig. 2: eine schematische Darstellung zur Erläuterung des zyklischen Datenverkehrs in dem Steuerungssystem gemäß Fig. 1, und
- Fig. 3: das Steuerungssystem aus Fig. 1 zu einem späteren Zeitpunkt während der Datenkommunikation nach dem neuen Verfahren.

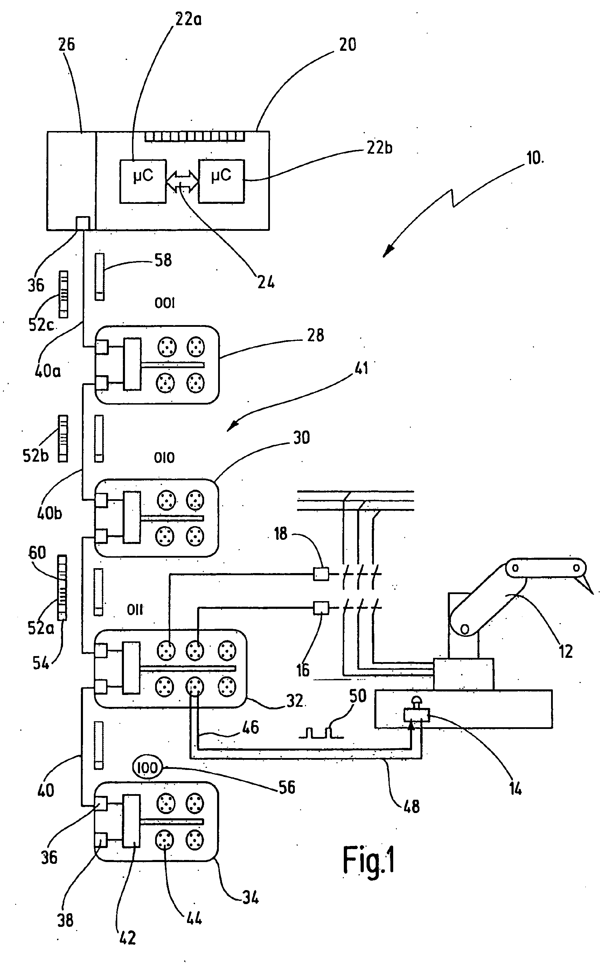

In Fig. 1 ist ein Ausführungsbeispiel des neuen Steuerungssystems in seiner Gesamtheit mit der Bezugsziffer 10 bezeichnet. Das Steuerungssystem 10 dient hier zum Absichern eines Roboters 12, dessen Bewegungen aufgrund der Geschwindigkeit und Masse des Roboters 12 eine Gefahr für Personen darstellen können. Typischerweise werden solche Roboter mit Hilfe von festen Schutzzäunen und beweglichen Schutztüren, Lichtgittern und ähnlichen Zugangssicherungen sowie mit Hilfe von Not-Aus-Tastern abgesichert. Der Einfachheit halber ist in Fig. 1 lediglich ein Not-Aus-Taster 14 dargestellt. Bei den Bezugsziffern 16 und 18 ist jeweils ein Schütz dargestellt. Die Arbeitskontakte der Schütze 16, 18 sind in Reihe zueinander in dem Stromversorgungspfad für die Antriebe des Roboters 12 angeordnet. Beim Betätigen des Not-Aus-Tasters 14, beim Öffnen einer Schutztür oder beim Durchtreten eines Lichtgitters muss der Roboter 12 mit Hilfe der Schütze 16, 18 fehlersicher abgeschaltet werden. "Fehlersicher" bedeutet in diesem Zusammenhang, dass die Sicherheitsfunktion nicht verlorengeht, auch wenn innerhalb des Steuerungssystems 10 ein Fehler auftritt. Es könnte beispielsweise sein, dass die Arbeitskontakte des Schützes 16 aufgrund eines vorherigen Schaltvorgangs verschweißt sind und sich nicht mehr öffnen lassen. Dieser Fehler führt jedoch nicht zum Verlust der Sicherheit, da die Unterbrechung der Stromversorgung durch die Arbeitskontakte des Schützes 18 weiterhin möglich ist. In ähnlicher Weise kann durch Redundanz und/oder integrierte Testfunktionen die geforderte Einfehlersicherheit für andere Komponenten des Steuerungssystems 10 erreicht werden.

Fig. 1 zeigt der Einfachheit halber nur das Steuerungssystem 10 zum Absichern des Roboters 12, nicht jedoch ein Steuerungssystem, das den Arbeitsbetrieb des Roboters 12 steuert. Prinzipiell können beide Steuerungssysteme in einer Steuereinheit realisiert sein. In vielen Fällen wird jedoch bis heute für die Sicherheitsfunktionen eine separate Steuereinheit verwendet, die hier bei Bezugsziffer 20 dargestellt ist. Die Steuereinheit 20 ist in den bevorzugten Ausführungsbeispielen fehlersicher ausgebildet, was hier vereinfacht anhand von zwei redundanten Prozessoren 22a, 22b dargestellt ist, die sämtliche Operationen redundant ausführen und miteinander vergleichen. Letzteres ist mit dem Pfeil 24 symbolisiert.

Mit der Bezugsziffer 26 ist ein so genanntes Busmodul bezeichnet, das in der Steuereinheit 20 integriert sein kann oder als separate Baugruppe mit der Steuereinheit 20 verbunden ist. Im dargestellten Ausführungsbeispiel ist das Busmodul 26 eine Baugruppe in einem eigenen Gehäuse, das an dem Gehäuse der Steuereinheit 20 befestigt werden kann. Das Busmodul 26 ist in diesem Ausführungsbeispiel eine erste Station im Sinne der Erfindung.

Mit den Bezugsziffern 28, 30, 32 und 34 sind weitere Stationen bezeichnet, wobei die Station 34 hier eine letzte Station im Sinne der Erfindung ist. Die Stationen 28 bis 34 besitzen jeweils zwei Busanschlüsse 36, 38, die galvanisch getrennt und unabhängig voneinander verwendbar sind. Das Busmodul 26 und die Stationen 28 bis 34 sind über Leitungsstücke 40 von Station zu Station zu einer Reihe 41 von Stationen \ verbunden. Beispielsweise verbindet ein erstes Leitungsstück 40a den Busanschluss (hier einzigen) 36 des Busmoduls 26 mit dem ersten Busanschluss 36 der Station 28. Ein zweites Leitungsstück 40b verbindet den zweiten Busanschluss 38 der Station 28 mit dem ersten Busanschluss 36 der nachfolgenden Station 30. Alle Stationen einschließlich des Busmoduls 26 sind somit über Punkt-zu-Punkt-Verbindungen mit zumindest einem und maximal zwei Nachbarn verbunden. Die Station 28 ist Nachfolger des Busmoduls 26 und Vorgänger der Station 30. Keine Station ist hier mit mehr als zwei anderen Stationen verbunden.

Die Stationen 28 bis 34 sind hier abgesetzte E/A-Einheiten zum Anschluss von Sensoren einschließlich handbetätigten Meldegeräten, wie etwa dem Not-Aus-Taster 14, sowie zum Anschluss von Aktoren, wie etwa den Schützen 16, 18. In bevorzugten Ausführungsbeispielen sind die Stationen 28 bis 34 in einem Gehäuse nach Schutzart IP 67 untergebracht und somit spritzwasser- oder sogar schwallwassergeschützt. In anderen Ausführungsbeispielen können die Stationen 28 bis 34 Steckmodule sein, die auf einen Modulträger aufgesteckt werden, oder sie können in anderen Gehäusebauformen untergebracht sein.

Jede Station 28 bis 34 besitzt hier einen Schnittstellenbaustein 42, der mit beiden Busanschlüssen 36, 38 verbunden ist. Der Schnittstellenbaustein 42 ist in bevorzugten Ausführungsbeispielen ein Mikrocontroller oder ein ASIC, der in der Lage ist, definierte Signal- oder Datenverarbeitungsschritte auszuführen, die dazu dienen, Sensordaten zum Versenden an die Steuereinheit 20 aufzubereiten und Aktordaten von der Steuereinheit 20 zu verarbeiten, um in Abhängigkeit davon Aktoren, wie etwa die Schütze 16, 18, anzusteuern.

Jede Station 28 bis 34 besitzt eine Anzahl von Anschlussbuchsen 44, an die Sensoren und/oder Aktoren angeschlossen werden können. In dem Ausführungsbeispiel gemäß Fig. 1 ist der Not-Aus-Taster 14 über eine Hinleitung 46 und eine Rückleitung 48 an eine Anschlussbuchse 44 angeschlossen. Über die Hinleitung 46 wird ein Taktsignal 50 an den Not-Aus-Taster 14 übertragen, welches über die Rückleitung 48 zurückgelesen wird. Auf diese Weise kann die Station 32 den Betätigungszustand des Not-Aus-Tasters 14 bestimmen und mit Hilfe eines Datentelegramms an die Steuereinheit 20 berichten.

Gemäß dem neuen Verfahren erzeugt das Busmodul 26 eine Anzahl von separaten Datentelegrammen 52, die nach Art einer Eimerkette von einer Station zur nächsten weitergereicht werden. In Fig. 1 ist ein erstes Datentelegramm 52a vom Busmodul 26 über das erste Leitungsstück 40a an die Station 28 gesendet worden. Die Station 28 hat dasselbe Datentelegramm 52a an die Station 30 weitergereicht. Die Station 30 versendet dasselbe Datentelegramm 52a ohne Änderung an die nächstfolgende Station 32. Zum gleichen Zeitpunkt, d.h. im selben Zeitintervall, versendet die Station 28 ein zweites Datentelegramm 52b an die Station 30. Ebenfalls zum gleichen Zeitpunkt versendet das Busmodul 26 ein drittes Datentelegramm 52c an die Station 28. Insgesamt erzeugt das Busmodul 26 in diesem Ausführungsbeispiel vier separate Datentelegramme (das vierte Datentelegramm ist in Fig. 1 nicht dargestellt), und versendet diese in vier aufeinanderfolgenden Zeitintervallen an die Reihe 41 der Stationen. Jedes Datentelegramm 52 enthält ein Adressfeld 54, in dem eine Adresse (hier nicht gesondert dargestellt) enthalten ist, die mit einer Stationsadresse 56 korreliert. In dem Ausführungsbeispiel gemäß Fig. 1 besitzt die Station 28 die Adresse 001, die Station 30 besitzt die Adresse 010, die Station 32 besitzt die Adresse 011, und die Station 34 besitzt die Adresse 100. Die Adresszuweisung an die Stationen 28 bis 34 erfolgt in bevorzugten Ausführungsbeispielen mit Hilfe von Adressvergabetelegrammen 58, die in Fig. 1 nur in gepunkteten Linien dargestellt sind, weil die Adressvergabe vor dem in Fig. 1 gezeigten Versenden von Datentelegrammen 52 erfolgt.

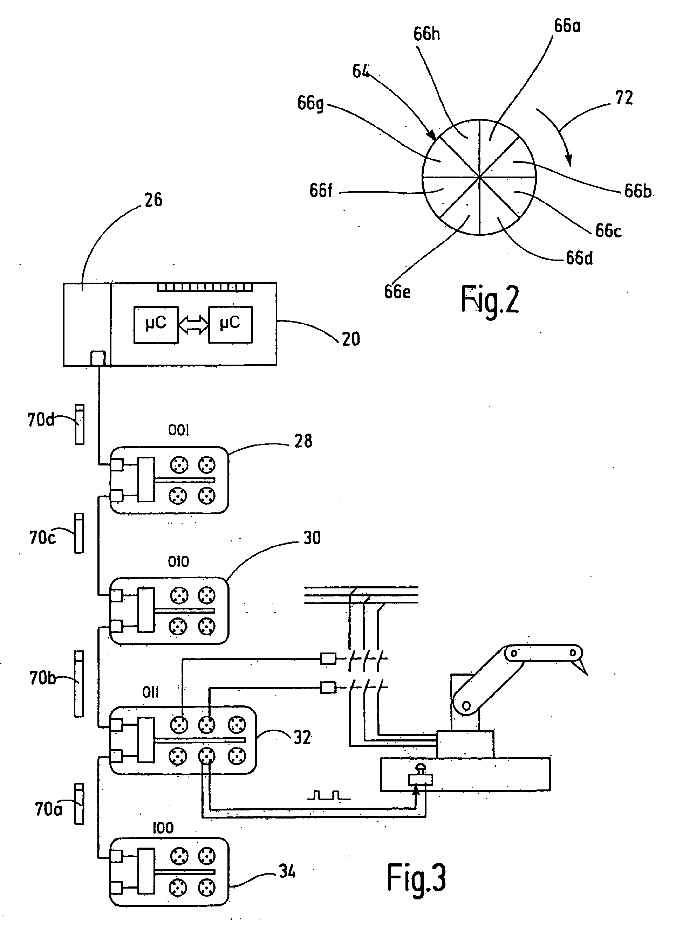

In einem besonders bevorzugten Ausführungsbeispiel enthält jedes Datentelegramm 52 ferner ein Codewort 60, das von Zeitintervall zu Zeitintervall variiert. In einem Ausführungsbeispiel wird das Codewort 60 jeweils geändert, nachdem ein vollständiger Kommunikationszyklus abgeschlossen ist, was nachfolgend anhand von Fig. 2 näher erläutert wird. In anderen Ausführungsbeispielen wird das Codewort in größeren oder noch kleineren Zeitabständen von der Steuereinheit geändert.

Fig. 2 zeigt einen Kreis 64, der einen vollständigen Kommunikationszyklus symbolisiert. Der Kommunikationszyklus 64 beginnt mit einem ersten Zeitintervall 66a, in dem das Busmodul 26 das erste Datentelegramm 52a an seinen Nachfolger, d.h. die Station 28, sendet. Die anderen Stationen 30 bis 34 senden in diesem Zeitintervall 66a keine Datentelegramme 52, es sei denn, dass in solchen "ungenutzten" Zeitintervallen eine direkte Querkommunikation zwischen einzelnen Stationen erfolgen soll, was in Ausführungsbeispielen der Erfindung durchaus möglich ist. In einem bevorzugten Ausführungsbeispiel findet jedoch keine derartige Querkommunikation zwischen den einzelnen Stationen statt.

Im zweiten Zeitintervall 66b sendet die Station 28 das empfangene Datentelegramm 52a an die Station 30 weiter. Außerdem empfängt sie innerhalb desselben Zeitintervalls 66b ein zweites Datentelegramm 52b von dem Busmodul 26. Im dritten Zeitintervall 66c sind drei Datentelegramme 52a, 52b, 52c auf den verschiedenen Leitungsstücken zwischen den Stationen 26, 28, 30 und 32 unterwegs. Im vierten Zeitintervall 66d versendet das Busmodul 26 ein viertes Datentelegramm an die Station 28, während die letzte Station 34 das erste Datentelegramm 52a erhält. Nach einer Anzahl von Zeitintervallen 66a bis 66d, die der Anzahl der zweiten Stationen plus der letzten Station entspricht, hat also jede Station ein an sie adressiertes Datentelegramm 52 empfangen. In dem bevorzugten Ausführungsbeispiel gemäß Fig. 1 erkennen die einzelnen Stationen 28 bis 34 jeweils anhand der Adressfelder 54 in den Datentelegrammen 52, ob ein Datentelegramm an sie selbst adressiert ist. Alternativ hierzu ist es in anderen Ausführungsbeispielen denkbar, dass die Stationen ihre jeweilige Position innerhalb der Reihe von Stationen kennen und die Anzahl von weitergereichten Datentelegrammen 52 mitzählen, um auf diese Weise zu erkennen, ob ein Datentelegramm an sie selbst adressiert ist. In einem solchen Ausführungsbeispiel ist es denkbar, auf ein explizites Adressfeld 54 in den Datentelegrammen 52 zu verzichten, weil sich die Adresse implizit aus der Anzahl der Datentelegramme ergibt.

Nachdem jede Station ein an sie adressiertes Datentelegramm empfangen hat, verarbeiten die Stationen 28 bis 34 die empfangenen Datentelegramme weitgehend zeitgleich. Die für die Datenverarbeitung benötigte Zeit ist in Fig. 2 aus Gründen der Übersichtlichkeit nicht dargestellt. Anschließend sendet jede Station 28 bis 34 ein Antworttelegramm 70, das an die erste Station 26 adressiert ist, an ihren Vorgänger. Diese Situation ist in Fig. 3 dargestellt. Im ersten Antwortintervall 66e sendet die letzte Station 34 ihr Antworttelegramm 70a an ihren Vorgänger 32. Im gleichen Intervall sendet die Station 28 ihr Antworttelegramm 70d an das Busmodul 26 und damit an die Steuereinheit 20. Im nächsten Zeitintervall 66f empfängt das Busmodul 26 das Antworttelegramm 70c der Station 30. Im nächsten Zeitintervall 66g empfängt das Busmodul 26 das Antworttelegramm 70b der Station 32. Im letzten Zeitintervall 66h des Kommunikationszyklus 64 empfängt das Busmodul 26 das Antworttelegramm 70a der letzten Station 34. Nun kann ein neuer Kommunikationszyklus 64 beginnen, was mit dem Pfeil 72 in Fig. 2 dargestellt ist.

Die Adresse der ersten Station 26 kann in den Antworttelegrammen 70 implizit enthalten sein, da sich die Adresse der ersten Station 26 bereits aus der Sende- bzw. Empfangsrichtung der Antworttelegramme 70 ergibt. Die erste Station kann jedoch auch eine explizite Adresse besitzen, wie etwa die Adresse 000. Es ist also prinzipiell nicht erforderlich, dass die Antworttelegramme 70 eine explizite Adressinformation beinhalten, um die erste Station 26 zu adressieren.

Das erste Leitungsstück 40a (erstes Bussegment) wird bei diesem Verfahren ohne größere Wartezeiten optimal ausgenutzt, da über dieses Leitungsstück 40a während des gesamten Kommunikationszyklus 64 Daten- und Antworttelegramme übertragen werden. Mit anderen Worten wird in jedem Zeitintervall 66 ein Daten- oder Antworttelegramm über das erste Leitungsstück 40a übertragen. Das zweite Leitungsstück 40b ist etwas weniger ausgelastet, weil im ersten Zeitintervall 66a und im letzten Zeitintervall 66h kein Daten- oder Antworttelegramm über dieses Leitungsstück 40b übertragen wird. In allen anderen Zeitintervallen 66 findet eine Übertragung von Telegrammen statt. Je weiter ein Leitungsstück oder Bussegment von der ersten Station 26 entfernt liegt, desto geringer ist die Busauslastung auf dem Segment, was jedoch kein Nachteil ist, da das erste Leitungsstück 40a optimal ausgenutzt und an die Verarbeitungsgeschwindigkeit des Busmoduls 26 bzw. der Steuereinheit 20 angepasst sein kann.

Die erste Station 26 sendet im ersten Zeitintervall 66a also ein Datentelegramm 52a an die letzte Station 34. Anschließend sendet die Station 26 weitere Datentelegramme, die an die zweiten Stationen in umgekehrter Reihenfolge zur Entfernung von der ersten Station adressiert sind. Die Antworttelegramme 70 senden alle Stationen 28 bis 34 hier weitgehend zeitgleich an die erste Station 26, wobei die Antworttelegramme 70 aufgrund der unterschiedlichen Entfernungen in aufeinanderfolgenden Zeitintervallen 66e bis 66h bei der ersten Station 26 eintreffen. Im Gegensatz zu einem gemeinsamen Datenrahmen, wie er beim Interbus oder ähnlichen Verfahren eingesetzt wird, findet die Datenkommunikation anhand von separaten, voneinander unabhängigen und individuell adressierbaren Daten- und Antworttelegrammen statt. Grundsätzlich ist es denkbar, dass die erste Station 26 nicht jede weitere Station 28 bis 34 in jedem Kommunikationszyklus 64 adressiert, so dass die Stationen 28 bis 34 in voneinander abweichenden Zyklen abgefragt werden können. Dies macht es möglich, die Busauslastung noch individueller an die Eigenschaften des Steuerungssystems 10 anzupassen.

In den bevorzugten Ausführungsbeispielen wird jeder Station 28 bis 34 eine eindeutige Adresse 56 zugewiesen. Bevorzugt erfolgt dies mit Hilfe der Adressvergabetelegramme 58 in einem Initialisierungsmodus, der entweder manuell gestartet werden kann oder, was sehr vorteilhaft ist, bei einer Spannungswiederkehr automatisch gestartet wird. In dem Initialisierungsmodus versendet die erste Station 26 ein erstes Adressvergabetelegramm 58 an ihren Nachfolger 28. Wenn der Nachfolger 28 noch keine Adresse zugewiesen bekommen hat, übernimmt er die im Adressvergabetelegramm 58 enthaltene Adresse (hier Adresse 001) und bestätigt die Adressübernahme durch ein Bestätigungstelegramm an die erste Station 26. Anschließend versendet die erste Station 26 ein weiteres Adressvergabetelegramm mit einer weiteren (anderen) Adresse an ihren Nachfolger 28. Da der Nachfolger 28 bereits eine Adresse zugewiesen bekommen hat, leitet er das Adressvergabetelegramm 58 an die nachfolgende Station 30 weiter. Diese übernimmt die Adresse und bestätigt die Adresszuweisung. Auf diese Weise erhalten alle Stationen der Reihe nach eine eindeutige Adresse, die im einfachsten Fall der Position der jeweiligen Station innerhalb der Reihe entspricht. Aufgrund der Bestätigungstelegramme erfährt die erste Station 26, wie viele nachfolgende Stationen angeschlossen sind. Bei sicherheitsrelevanten Stationen kann eine zugewiesene Adresse vorteilhaft mit Hilfe von weiterem Telegrammverkehr verifiziert werden.

Wie weiter oben schon angedeutet wurde, sind das neue Verfahren und die neue Vorrichtung insoweit flexibel, als dass sich die Datentelegramme 52a, 52b, die an verschiedene Stationen 34, 32 adressiert sind, strukturell voneinander unterscheiden können, was in Fig. 1 anhand der beiden Datentelegramme 52a, 52b symbolisch dargestellt ist.

Die Stationen 28 bis 34 codieren ihre Sendedaten an die erste Station 26 in den bevorzugten Ausführungsbeispielen mit einem Codewort 60, das von der ersten Station 26 mit jedem Datentelegramm 52 versendet wird. In den bevorzugten Ausführungsbeispielen ändert die erste Station das Codewort in jedem neuen Kommunikationszyklus 64. Zusätzlich senden die Stationen 28 bis 34 in den bevorzugten Ausführungsbeispielen auch die uncodierten Informationen, gewissermaßen also im "Klartext". Auf diese Weise erhält die erste Station 26 die Daten der anderen Stationen zweifach und kann anhand der unterschiedlichen Übertragung (Klartext und variabel codiert) eine Plausibilitätsprüfung vornehmen. Insbesondere ist es mit Hilfe der variablen Codewörter möglich, stuck-at Fehler zu entdecken, auch wenn die Daten der einzelnen Stationen über viele Zeitintervalle gleichbleibend sind. In diesen Ausführungsbeispielen eignet sich das Steuerungssystem 10 besonders gut zur Steuerung von sicherheitsrelevanten Prozessen. Weitere Details zum Kodieren der Daten anhand der zeitlich variierenden Codewörter 60 sind in DE 103 20 522 A1 beschrieben, auf die hier vollumfänglich Bezug genommen ist.

## Patentansprüche

1. Verfahren zum Übertragen von Daten in einem automatisierten Steuerungssystem (10) mit einer Vielzahl von räumlich verteilten Stationen (26 - 34), die von Station zu Station zu einer Reihe (41) von Stationen verbunden sind, wobei die Reihe eine erste Station (26), zumindest eine zweite Station (28 - 32) und eine letzte Station (34) aufweist, wobei die erste Station (26) und jede zweite Station (28 - 32) einen Nachfolger in der Reihe (41) besitzen, und wobei jede zweite Station (28 - 32) und die letzte Station (34) einen Vorgänger in der Reihe (41) besitzen, mit den Schritten:
- die erste Station (26) erzeugt eine Anzahl von separaten Datentelegrammen (52), die gleich der Anzahl der zweiten Stationen (28 - 32) plus der letzten Station (34) ist, wobei jedes Datentelegramm (52) an genau eine der Stationen (28 - 34) adressiert ist,
- die erste Station (26) versendet die Datentelegramme (52) in definierten Zeitintervallen (66) einzeln an ihren Nachfolger (28), wobei die Datentelegramme (52) in umgekehrter Reihenfolge der Stationen adressiert sind,
- jede zweite Station (28 - 32) empfängt ein Datentelegramm (52) von ihrem jeweiligen Vorgänger und sendet das empfangene Datentelegramm (52) nach Art einer Eimerkette an ihren jeweiligen Nachfolger, bis sie ein Datentelegramm (52) erhält, das an sie selbst adressiert ist,
- die zweiten Stationen (28 - 32) und die letzte Station (34) erzeugen jeweils ein individuelles Antworttelegramm (70), das an die erste Station (26) adressiert ist, und senden die individuellen Antworttelegramme (70) nach Art einer Eimerkette an ihren jeweiligen Vorgänger,
wobei die Stationen (26 - 34) die Datentelegramme (52) alle weitgehend zeitgleich an ihren jeweiligen Nachfolger senden, so dass sich auf jedem Leitugsteilstück (40) nur ein einziges Datentelegramm (52) befindet.

2. Verfahren nach Anspruch 1, **dadurch gekennzeichnet, dass** die zweiten Stationen (28 - 32) und die letzte Station (34) die empfangenen Datentelegramme (52) weitgehend zeitgleich zueinander verarbeiten, um die individuellen Antworttelegramme (70) weitgehend zeitgleich zu erzeugen, so dass sich auf jedem Leitugsteilstück (40) nur ein einziges Datentelegramm (52) befindet.

3. Verfahren nach einem der Ansprüche 1 oder 2, **dadurch gekennzeichnet, dass** die erste Station (26) vor dem erstmaligen Versenden von Datentelegrammen (52) eine Vielzahl von Adressvergabetelegrammen (58) erzeugt und an ihren Nachfolger (28) versendet, wobei den zweiten Stationen (28 - 32) und der letzten Station (34) jeweils eine eindeutige Stationsadresse (56) anhand der Adressvergabetelegramme (58) zugewiesen wird.

4. Verfahren nach Anspruch 3, **dadurch gekennzeichnet, dass** alle zweiten Stationen (28 - 32), die eine eindeutige Stationsadresse (56) erhalten haben, die Adressvergabetelegramme (58) an ihren jeweiligen Nachfolger versenden.

5. Verfahren nach einem der Ansprüche 1 bis 4, **dadurch gekennzeichnet, dass** jede zweite Station (28 - 32) einen ersten und einen separaten zweiten Busanschluss (36, 38) besitzt, wobei jede zweite Station (28 - 32) über den ersten Busanschluss (36) mit ihrem Vorgänger und über den zweiten Busanschluss (38) mit ihrem Nachfolger verbunden ist.

6. Verfahren nach Anspruch 5, **dadurch gekennzeichnet, dass** die Busanschlüsse (36, 38) CAN-Bus kompatibel sind.

7. Verfahren nach einem der Ansprüche 1 bis 6, **dadurch gekennzeichnet, dass** die erste Station (26) die Datentelegramme (52) in zyklisch wiederkehrenden Zeitintervallen (66) versendet, wobei jedes Datentelegramm (52) ein Codewort (60) enthält, das von Zeitintervall zu Zeitintervall variiert, und wobei die zweiten Stationen (28 - 32) und die letzte Station (34) die jeweiligen individuellen Antworttelegramme (70) in Abhängigkeit von dem zeitlich variierenden Codewort (60) erzeugen.

8. Verfahren nach einem der Anspruche 1 bis 7, **dadurch gekennzeichnet, dass** die erste Station (26) für jede zweite Station (28 - 32) und für die letzte Station (34) ein individuelles Datentelegramm (52) erzeugt und versendet, wobei die individuellen Datentelegramme (52) für zumindest zwei verschiedene Stationen (32, 34) strukturell unterschiedlich sind.

9. Steuerungssystem mit einer Vielzahl von räumlich verteilten Stationen (26 - 34), von denen zumindest einige Eingangsanschlüsse (44) zum Anschluss von Sensoren (14) oder Ausgangsanschlüsse zum Anschluss von Aktoren (16, 18) aufweisen, wobei die Stationen (26 - 34) von Station zu Station zu einer Reihe (41) von Stationen verbunden sind, wobei die Reihe (41) eine erste Station (26), zumindest eine zweite Station (28 - 32) und eine letzte Station (34) aufweist, wobei die erste Station (26) und jede zweite Station (28 - 32) einen Nachfolger in der Reihe (41) besitzen, und wobei jede zweite Station (28 - 32) und die letzte Station (34) einen Vorgänger in der Reihe (41) besitzen, und wobei
- die erste Station (26) dazu ausgebildet ist, eine Anzahl von separaten Datentelegrammen (52) zu erzeugen, die gleich der Anzahl der zweiten Stationen (28 - 32) plus der letzten Station (34) ist, wobei jedes Datentelegramm (52) an genau eine der Stationen (28 - 34) adressiert ist,
- die erste Station (26) ferner dazu ausgebildet ist, die Datentelegramme (52) in definierten Zeitintervallen (66) einzeln an ihren Nachfolger (28) zu versenden, wobei die Datentelegramme (52) in umgekehrter Reihenfolge der Stationen adressiert sind,
- jede zweite Station (28 - 32) dazu ausgebildet ist, ein Datentelegramm (52) von ihrem jeweiligen Vorgänger zu empfangen und das empfangene Datentelegramm (52) nach Art einer Eimerkette an ihren jeweiligen Nachfolger zu versenden, bis sie ein Datentelegramm (52) erhält, das an sie selbst adressiert ist, und
- die zweiten Stationen (28 - 32) und die letzte Station (34) jeweils dazu ausgebildet sind, ein individuelles Antworttelegramm (70), das an die erste Station (26) adressiert ist, zu erzeugen und die individuellen Antworttelegramme (70) nach Art einer Eimerkette an ihren jeweiligen Vorgänger zu senden,
wobei die Stationen (26 - 34) die Datentelegramme (52) alle weitgehend zeitgleich an ihren jeweiligen Nachfolger senden, so dass sich auf jedem Leitugsteilstück (40) nur ein einziges Datentelegramm (52) befindet.

10. Dezentrales Peripheriegerät für ein Steuerungssystem (10) nach Anspruch 9, mit einer Anzahl von Anschlüssen (44) zum Anschluss von Sensoren (14) und/oder Aktoren (16, 18), mit einem ersten und einem separaten zweiten Busanschluss (36, 38), und mit einem Kommunikationsbaustein (42), der dazu ausgebildet ist, das dezentrale Peripheriegerät als zweite oder letzte Station (28 - 34) in dem Steuerungssystem (10) nach Anspruch 10 zu betreiben.

## Claims

1. A method for transmitting data in an automated control system (10) having a plurality of spatially distributed stations (26 - 34) which are connected from station to station to form a series (41) of stations, wherein the series has a first station (26), at least one second station (28 - 32) and a last station (34), wherein the first station (26) and every second station (28 - 32) each have a successor in the series (41), and wherein every second station (28 - 32) and the last station (34) each have a predecessor in the series (41), the method comprising the following steps:
- the first station (26) generates a number of separate data telegrams (52) which is equal to the number of second stations (28 - 32) plus the last station (34), wherein each data telegram (52) is addressed to precisely one of the stations (28 - 34),
- the first station (26) sends the data telegrams (52) one by one at defined time intervals to its successor (28), wherein the data telegrams (52) are addressed in reverse order of the stations,
- every second station (28 - 32) receives a data telegram (52) from its respective predecessor and sends the received data telegram (52) to its respective successor in the manner of a bucket brigade, until it receives a data telegram (52) which is addressed to said second station itself,
- the second stations (28 - 32) and the last station (34) each generate an individual reply telegram (70) which is addressed to the first station (26), and they send the individual reply telegrams (70) to their respective predecessor in the manner of a bucket brigade,
wherein the stations (26 - 34) send the data telegrams (52) largely simultaneously to their respective successor.

2. The method of claim 1, **characterized in that** the second stations (28 - 32) and the last station (34) process the received data telegrams (52) largely simultaneously with one another in order to generate the individual reply telegrams (70) largely simultaneously.

3. The method of claim 1 or 2, **characterized in that** the first station (26) generates a plurality of address allocation telegrams (58) and sends them to its successor (28) before data telegrams (52) are sent for the first time, wherein the second stations (28 - 32) and the last station (34) each are assigned a unique station address (56) on the basis of the address allocation telegrams (58).

4. The method of claim 3, **characterized in that** all of the second stations (28 - 32) which have received a unique station address (56) send the address allocation telegrams (58) to their respective successor.

5. The method of one of claims 1 to 4, **characterized in that** every second station (28 - 32) has a first and a separate second bus connector (36, 38), wherein every second station (28 - 32) is connected via the first bus connector (36) to its predecessor and via the second bus connector (38) to its successor.

6. The method of claim 5, **characterized in that** the bus connectors (36 - 38) are CAN-bus-compatible.

7. The method of one of claims 1 to 6, **characterized in that** the first station (26) sends the data telegrams (52) at cyclically recurring time intervals (66), wherein each data telegram (52) comprises a code word (60) which varies from time interval to time interval, and wherein the second station (28 - 32) and the last station (34) generate the respective individual reply telegrams (70) as a function of the code word (60) which varies over time.

8. The method of one of claims 1 to 7, **characterized in that** the first station (26) generates and sends an individual data telegram (52) for every second station (28 - 32) and for the last station (34), wherein the individual data telegrams (52) for at least two different stations (32, 34) are structurally different.

9. A control system having a plurality of spatially distribute stations (26 - 34), at least some of which have input connectors (44) for connecting sensors (14) or output connectors for connecting actuators (16, 18), wherein the stations (26 - 34) are connected from station to station to form a series (41) of stations, wherein the series (41) has a first station (26), at least a second station (28 - 32) and a last station (34), wherein the first station (26) and every second station (28 - 32) each have a successor in the series (41), and wherein every second station (28 - 32) and the last station (31) each have a predecessor in the series (41), and wherein
- the first station (26) is designed to generate a number of separate data telegrams (52) which is equal to the number of second stations (28 - 32) plus the last station (34), wherein every data telegram (32) is addressed to precisely one of the stations (28 - 34),
- the first station (26) is further designed to send the data telegrams (52) one by one at defined time intervals (66) to its successor (28), wherein the data telegrams (52) are addressed in reverse order of the stations,
- every second station (28 - 32) is designed to receive a data telegram (52) from its respective predecessor and to send the received data telegram (52) to its respective successor in the manner of a bucket brigade until it receives a data telegram (52) which is addressed to said second station itself, and
- the second stations (28 - 32) and the last station (34) are each designed to generate an individual reply telegram (70) which is addressed to the first station (26), and to send the individual reply telegrams (70) to their respective predecessor in the manner of a bucket brigade,
wherein the stations (26 - 34) send the data telegrams (52) largely simultaneously to their respective successor.

10. A remote peripheral device for a control system (10) according to claim 9, comprising a number of connectors (44) for connecting sensors (14) and/or actuators (16, 18), comprising a first and a separate second bus connector (36, 38), and comprising a communication module (42) designed to operate the remote peripheral device as a second or as a last station (28 - 34) in the control system (10) of claim 10.

## Revendications

1. Procédé de transmission de données dans un système de commande automatisé (10) comportant une pluralité de stations réparties spatialement (26-34) qui sont connectées de station en station à une série (41) de stations, la série comprenant une première station (26), au moins une seconde station (28-32) et une dernière station (34), la première station (26) et chaque seconde station (28-32) possédant un successeur dans la série (41), et chaque seconde station (28-32) et la dernière station (34) possédant un prédécesseur dans la série (41), comprenant les étapes suivantes :
- la première station (26) génère un nombre de télégrammes de données séparés (52) qui est égal au nombre de secondes stations (28-32) plus la dernière station (34), chaque télégramme de données (52) étant adressé à exactement l'une des stations (28-34),
- la première station (26) envoie les télégrammes de données (52) individuellement dans des intervalles de temps définis (66) à son successeur (28), les télégrammes de données (52) étant adressés dans l'ordre inverse de celui des stations,
- chaque seconde station (28-32) reçoit un télégramme de données (52) de son prédécesseur respectif et émet le télégramme de données reçu (52) à la manière d'un chapelet vers son successeur respectif, jusqu'à ce qu'elle obtienne un télégramme de données (52) qui est adressé à elle-même,
- les secondes stations (28-32) et la dernière station (34) génèrent respectivement un télégramme de réponse individuel (70) qui est adressé à la première station (26), et envoient les télégrammes de réponse individuels (70) à la manière d'un chapelet à leurs prédécesseurs respectifs, les stations (26-34) envoyant toutes les télégrammes de données (52) de manière sensiblement simultanée à leurs successeurs respectifs, de telle sorte qu'un seul télégramme de données (52) se trouve sur chaque tronçon de ligne (40).

2. Procédé selon la revendication 1, **caractérisé en ce que** les secondes stations (28-32) et la dernière station (34) traitent les télégrammes de données reçus (52) de manière sensiblement simultanée afin de générer les télégrammes de réponse individuels (70) de manière sensiblement simultanée, de telle sorte qu'un seul télégramme de données (52) se trouve sur chaque tronçon de ligne (40).

3. Procédé selon l'une quelconque des revendications 1 ou 2, **caractérisé en ce que** la première station (26) génère une pluralité de télégrammes d'attribution d'adresse (58) avant le premier envoi de télégrammes de données (52) et les envoie à son successeur (28), une adresse de station unique (56) étant respectivement allouée aux secondes stations (28-32) et à la dernière station (34) sur la base des télégrammes d'attribution d'adresses (58).

4. Procédé selon la revendication 3, **caractérisé en ce que** la totalité des secondes stations (28-32) ayant obtenu une adresse de station unique (56) envoient les télégrammes d'attribution d'adresses (58) à leurs successeurs respectifs.

5. Procédé selon l'une quelconque des revendications 1 à 4, caractérisé en ce chaque seconde station (28-32) possède un premier connecteur de bus et un second connecteur de bus séparé (36, 38), chaque seconde station (28-32) étant connectée par l'intermédiaire de la première liaison par bus (36) à son prédécesseur et par l'intermédiaire de la seconde liaison par bus (38) à son successeur.

6. Procédé selon la revendication 5, **caractérisé en ce que** les liaisons par bus (36, 38) sont compatibles avec un bus CAN.

7. Procédé selon l'une quelconque des revendications 1 à 6, **caractérisé en ce que** la première station (26) envoie les télégrammes de données (52) au cours d'intervalles de temps cycliquement récurrents (66), chaque télégramme de données (52) contenant un mot de code (60) qui varie d'un intervalle de temps à l'autre et les secondes stations (28-32) et la dernière station (34) générant les télégrammes de réponse individuels respectifs (70) en fonction du mot de code variant dans le temps (60).

8. Procédé selon l'une quelconque des revendications 1 à 7, **caractérisé en ce que** la première station (26) génère et envoie un télégramme de données individuel (52) pour chaque seconde station (28-32) et pour la dernière station (34), les télégrammes de données individuels (52) étant structurellement différents pour au moins deux stations différentes (32, 34).

9. Système de commande comportant une pluralité de stations réparties spatialement (26-34) dont au moins certaines comprennent des connecteurs d'entrée (44) destinés à raccorder des capteurs (14) ou des connecteurs de sortie destinés à raccorder des actionneurs (16, 18), les stations (26-34) étant connectées de station en station en une série (41) de stations, la série (41) comprenant une première station (26), au moins une seconde station (28-32) et une dernière station (34), la première station (26) et chaque seconde station (28-32) possédant un successeur dans la série (41), et chaque seconde station (28-32) et la dernière station (34) possédant un prédécesseur dans la série (41), et dans lequel :
- la première station (26) est conçue pour générer un nombre de télégrammes de données séparés (52) qui est égal au nombre de secondes stations (28-32) plus la dernière station (34), chaque télégramme de données (52) étant adressé à exactement l'une des stations (28-34),
- la première station (26) est en outre conçue pour envoyer les télégrammes de données (52) individuellement dans des intervalles de temps définis (66) à leur successeur respectif (28), les télégrammes de données (52) étant adressés dans l'ordre inverse de celui des stations,
- chaque seconde station (28-32) est conçue pour recevoir un télégramme de données (52) de son prédécesseur respectif et pour envoyer le télégramme de données reçu (52) à la manière d'un chapelet à ses successeurs respectifs, jusqu'à ce qu'elle obtienne un télégramme de données (52) qui est adressé à elle-même, et
- les secondes stations (28-32) et la dernière station (34) sont respectivement conçues pour générer un télégramme de réponse individuel (70) qui est adressé à la première station (26), et pour envoyer les télégrammes de réponse individuels (70) à la manière d'un chapelet à leurs prédécesseurs respectifs,
les stations (26-34) émettant toutes les télégrammes de données (52) de manière sensiblement simultanée à leurs successeurs respectifs, de telle sorte qu'un seul télégramme de données (52) se trouve sur chaque tronçon de ligne (40).

10. Appareil périphérique décentralisé destiné à un système de commande (10) selon la revendication 9, comportant un certain nombre de connecteurs (44) destinés à raccorder des capteurs (14) et/ou des actionneurs (16, 18), comportant un premier connecteur de bus et un second connecteur de bus séparé (36, 38), et comportant un composant de communication (42) qui est conçu pour faire fonctionner l'appareil périphérique décentralisé en tant que seconde ou dernière station (28-34) dans le système de commande (10) selon la revendication 10.
